# EUROPEAN PATENT APPLICATION

(11) **EP 4 668 044 A1**
(43) Date of publication of application: **24.12.2025**
(21) Application number: 25177629.0
(22) Date of filing: 20.05.2025
(51) Int. Cl.: G05D 1/20

(54) **A METHOD IN A SELF-PROPELLED ROBOTIC TOOL AND A SELF-PROPELLED ROBOTIC TOOL**

(30) Priority: 20.06.2024 SE 2450685
(71) Applicant: Husqvarna AB, 561 82 Huskvarna (SE)
(72) Inventor: Liljedahl, Dan, Huskvarna (SE)

(57) **Abstract**

The present disclosure relates to a self-propelled robotic work tool 1 and a method for collision detection in such a self-propelled robotic tool. The robotic tool comprises at least one driving wheel 9 driven by an electric motor 35, and at least one collision detection sensor 15)for detecting a collision with another object 7. In the method the robotic tool operates in a first mode 55 where the collision detection sensor is functional, and when determining 57 a condition where the collision detection sensor 15 is non-functional or irrelevant, it enters a second mode 59. In the first mode 55, collision detection is carried out based on the collision detection sensor 15, and a motor current baseline in a non-collision state is recorded. In the second mode 57, collision detection is instead carried out based on a motor current measurement in relation to the recorded motor current baseline. This allows reliable and efficient collision detection under different circumstance.

## Description

### Field of the invention

The present disclosure relates to a method for collision detection in a self-propelled robotic tool. The robotic tool comprises at least one driving wheel driven by an electric motor, and at least one collision detection sensor for detecting a collision with another object.

The present disclosure also considers a corresponding self-propelled robotic tool.

### Technical background

Such robotic tools can utilize an optical sensor that detects objects in front of the robotic tool or mechanical sensors that detects when the robotic tool collides with another object.

US-11963478-B2 describes another option where motor currents are compared to expected currents determined with IMU data in order to detect collisions.

One problem associated with known collision detection methods is how to reliably detect collisions efficiently and in different circumstances.

### Summary of the invention

One object of the present disclosure is therefore to provide reliable and efficient collision detection in different circumstances that a robotic tool can experience.

This object is achieved by means of a method as defined in claim 1. More specifically, in a method of the initially mentioned kind, the robotic tool is configured to operate in a first mode where the collision detection sensor is functional, and if a condition is determined where the collision detection sensor is non-functional or irrelevant, the robotic tool enters a second mode. In the first mode, collision detection is carried out based on the collision detection sensor, and a motor current baseline in a non-collision state is recorded. In the second mode, collision detection is carried out based on a motor current measurement in relation to the recorded motor current baseline.

This allows the collision detection to be done with the sensor, but as soon as this is not possible, the robotic tool can switch to the second mode where collision detection is instead carried out based on knowledge of the expected driving resistance that is in turn based on data recorded in the first mode.

Thereby, the robotic tool is made capable of efficiently detecting collisions also under circumstances when the normal collision detection is disabled.

The motor current baseline may be recorded with IMU data, and in the second mode, the collision detection may be based on a combination of motor current and IMU data. This makes the detection more reliable as also the movement of the robotic tool that results from the provided motor current may be taken into account.

Similarly, motor current baseline may be recorded with elevation data, and in the second mode, the collision detection may be based on a combination of motor current and elevation data. This makes it possible to take into account, the robotic work tool driving uphill, for instance, where a higher motor current need not necessarily indicate a collision.

The determining of a condition where the collision detection sensor is non-functional or irrelevant may be based on the robotic work tool reversing. This provides a collision detection function in a robotic work tool with a forward-looking sensor even when reversing.

The collision detection sensor may be an optical sensor and the determining of a condition where the collision detection sensor is non-functional or irrelevant may be based on the collision detection sensor not receiving useful data. This may be the case for instance if the view of the optical sensor is being obscured in some way.

The method may be carried out in a robotic garden-, or agricultural tool, such as typically in a robotic lawnmower.

The present disclosure also considers a self-propelled robotic tool configured to carry out the method as outlined above.

### Brief description of the drawings

- Fig 1: shows a self-propelled robotic tool in the form of a lawnmower.
- Fig 2: illustrates a self-propelled robotic tool operating in a work area.
- Fig 3: illustrates modes of operation in collision detection.
- Fig 4: shows a flow chart of a collision detection method.
- Fig 5: illustrates schematically components in a collision detection arrangement.

### Detailed description

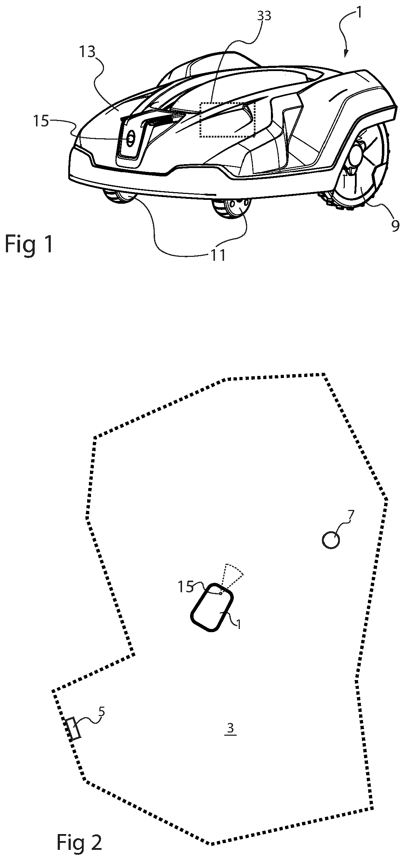

Self-propelled robotic tools, for instance in the form of robotic lawnmowers 1 as shown in fig 1, have become widely used. The present disclosure may also be useful in connection with robotic tools configured as robotic vacuum cleaners, golf ball collecting tools or any other type of robotic tool that moves autonomously and operates over a work area.

Typically, as illustrated in fig 2, such robotic tools 1 operate autonomously in a work area 3, and may intermittently connect to a charging station 5, although this is not necessary in the present context. The robotic tool 1 may be configured to remain within the work area 3, for instance by detecting a limitation cable buried at the outer periphery thereof or using other positioning technologies such as enhanced satellite navigation techniques of different kinds. The robotic tool 1 is also devised to avoid collisions with objects 7 in the work area 3, which may be temporarily or permanently located therein. To this end, the robotic tool may comprise a collision sensor 15 as will be discussed, which may typically detect objects in front of the robotic tool 1 with regard to its normal direction of movement, as illustrated in fig 2.

Returning to fig 1, a typical configuration of a robotic tool 1 may include two rear driving wheels 9, driven by electric motors. The robotic tool 1 may further comprise un-driven swiveling front wheels 11. However, in the present context many other configurations are conceivable, such as four-wheel driven configurations, articulated configurations, etc. The interior functions of the robotic tool 1 may be hidden under an outer cover 13, but in some cases the aforementioned collision sensor 15 that will be described in the following may protrude therethrough.

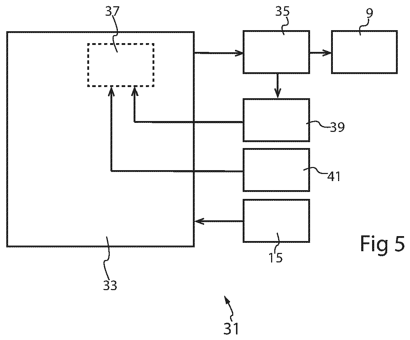

Parts of a control system 31 for a robotic tool 1 are described in fig 5. There may be provided a control unit 33 that performs various control tasks in the operation of the robotic tool 1. For instance, in a robotic lawnmower 1, the control unit 33 controls how the lawnmower 1 drives, controls cutting implements that cut the lawn as the lawnmower 1 moves over the work area, carries out border detection and navigation as well as battery control, etc. Typically, the control unit 33 may be devised as a microprocessor where functions of the robotic tool 1 are software-implemented.

The collision sensor 15 is connected to the control unit 33 and may be devised in different ways. Early robotic tools 1 often provided a mechanical collision sensor 15 in the form of a switch which senses the cover 13 of the robotic tool 1 moving in relation to the robotic tool chassis, thus simply detecting the robotic tool 1 having bumped into a foreign object 7. In such cases, the robotic tool 1 may reverse while changing its heading and then attempt driving forward in the new heading, possible passing the obstacle.

With more sophisticated collision sensors 15, such as based on cameras or LIDAR functionality, the collision can be entirely avoided entirely, the collision sensor 15 detecting objects 7 before a collision takes place. Such collision sensors 15 may typically protrude through the robotic tool's 1 cover 13, as illustrated in fig 1.

In some cases, the collision sensor 15 may become temporarily non-functional or irrelevant. For instance, a camera or other optical sensor may become non-functional by being covered by dirt or grass clippings, or simply by light disappearing after sunset. Further, a forward-looking sensor 15 is of little use when the robotic tool 1 reverses. Other circumstances where the sensor 15 becomes temporarily non-functional or irrelevant are conceivable.

The robotic tool 1 of the present disclosure deals with such circumstances by temporarily basing collision detection on the motor currents used to drive the robotic tool 1. The aforementioned document US-11963478-B2 describes a method where motor currents are generally used for collision detection. In that case, IMU-, inertia measurement unit, parameters are measured. An algorithm predicts required motor currents based on the measured parameters. Those currents are compared with the actual currents resulting in a current error, which is used for collision detection. The algorithm is adaptable by adjusting algorithm based on the current error exceeding a threshold such that the collision detection adapts to the circumstances in which the robotic tool is used.

In the present case, a simplified algorithm 37 can be accomplished by acquiring data while the collision detection sensor is active. The algorithm 37 may be implemented in the control unit 33, as illustrated in fig 5. The currents of one or more motors 35 driving the driving wheels 9 (see also fig 1) are measured by a current measurement unit 39. Optionally, the algorithm may also be based on data from an inclination and/or inertia measurement unit, IMU, 41.

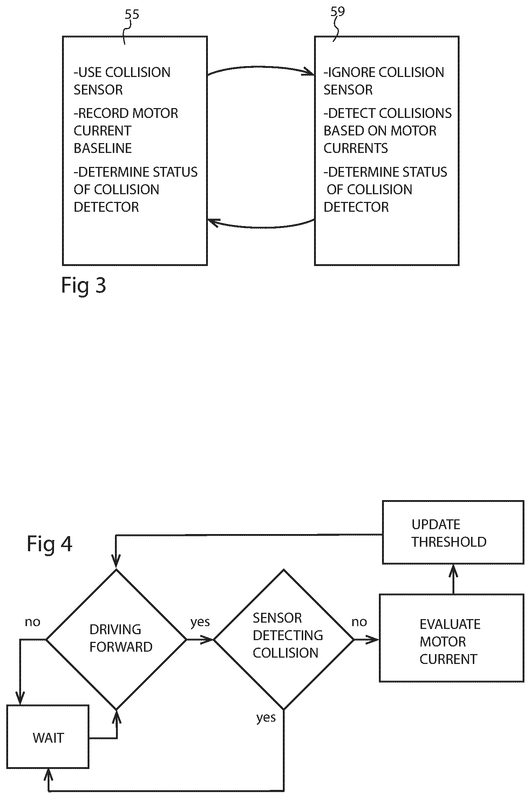

In the present disclosure, the robotic tool 1 is capable of switching between two modes 55, 59, as illustrated in fig 3. In the first mode 55, which may be referred to as a normal mode, the collision detection sensor 15 is functional. In the second mode 59, which may be referred to as an exceptional mode, the collision detection sensor 15 is non-functional or irrelevant.

Thus, in the first mode 55, collision detection is carried out based on the collision detection sensor 15.

While the robotic tool 1 is moving in this mode, a motor current baseline in a non-collision state is recorded. This provides a known parameter that can be used in the second mode 59 as will be shown. Optionally, inclination- and/or IMU-data from an inclination and/or IMU sensor 41 may be recorded together with this data as will be discussed.

While in the first mode 55, the control unit 33 also monitors if the collision detection sensor 15 becomes irrelevant or malfunctions, and, if so, the robotic tool 1 enters the second mode.

The collision detection sensor 15 becoming irrelevant or malfunctioning, as mentioned can be caused by different circumstances as mentioned.

To start with, if the collision detection sensor 15 is forward-looking and the robotic tool 1 reverses, the sensor of course cannot be trusted for collision detection, as the data provided is irrelevant for the detection in question.

The collision detection sensor 15 may be non-functional by being obstructed by grass clippings, debris or leaves etc., if an optical sensor is used. Further, in that case, unless auxiliary light is provided, an optical collision detection sensor 15 is depending on sunlight which of course disappears at night.

A mechanical collision detection sensor 15 of the above-described legacy type may be jammed by wet grass clippings, for instance, such that the associated switch becomes inoperable.

The control unit 33 thus monitors the data from the collision detection sensor 15 and/or its own driving instructions to detect that the collision detection sensor 15 becomes irrelevant or malfunctioning and then enters the second mode 59.

When in the second mode 59, as also illustrated in fig 3, the collision detection sensor 15 is temporarily ignored for collision detection purposes. Instead, collision detection is carried out based on a motor current measurement provided by the current measurement unit 39. Then, collision detection is done with this measurement in relation to the already established motor current baseline.

In the simplest form, this collision detection can be made by comparing this presently measured motor current with a threshold based on the established motor current baseline. For instance, if the current exceeds e.g. 110% of the motor current baseline established during normal use, it may be determined by the algorithm 37 of the control unit 33 that a collision has occurred. If so, the robotic tool 1 may attempt to avoid an obstacle 7 by reversing and changing its heading, for instance.

The algorithm 37 carrying out the collision detection in this way may be enhanced for example by taking data from an inclination sensor or IMU 41 into account. For instance, a robotic vehicle driving uphill at a few degrees may need a significantly higher motor current even if no collision takes place. The moving speed of the robotic work tool may also be taken into account. It is therefore possible to adjust a threshold depending on data from the IMU, and corresponding baseline data can also be collected in the first mode 55. For instance, a lookup table comprising different baseline currents and their corresponding IMU data can be established while the collision detection sensor 15 is used for collision detection and no collision takes place. Then, in the second mode 59, the detected IMU data may be used to find a corresponding motor current threshold.

Fig 4 illustrates schematically how the control unit 33 may update the current threshold. This is done under the condition that the robotic tool 1 is driving forward and that no collision is detected by the collision detection sensor 15. In this way, the motor current baseline may be updated several times per minute, and always be up to date. If the robotic tool 1 for instance encounters thick grass that has not been cut in a while, the threshold may be quickly adjusted upwards.

The present disclosure is not restricted to the above-described examples and may be varied and altered in different ways within the scope of the appended claims.

## Claims

1. A method for collision detection in a self-propelled robotic tool (1), the robotic tool comprising at least one driving wheel (9) driven by an electric motor (35), and at least one collision detection sensor (15) for detecting a collision with another object (7), the method **characterized by:**
- operating in a first mode (55) where the collision detection sensor is functional,
- determining (57) a condition where the collision detection sensor (15) is non-functional or irrelevant, and
- upon determining said condition, entering a second mode (59), wherein
- in the first mode (55), collision detection is carried out based on the collision detection sensor (15), and a motor current baseline in a non-collision state is recorded, and
- in the second mode (57), collision detection is carried out based on a motor current measurement in relation to said motor current baseline.

2. Method according to claim 1, wherein the motor current baseline is recorded with IMU data, and in the second mode (57), the collision detection is based on a combination of motor current and IMU data.

3. Method according to claim 1 or 2, wherein the motor current baseline is recorded with elevation data, and in the second mode (57), the collision detection is based on a combination of motor current and elevation data.

4. Method according to any of the preceding claims, wherein the determining (57) of a condition where the collision detection sensor (15) is non-functional or irrelevant is based on the robotic work tool reversing.

5. Method according to any of the preceding claims, wherein the collision detection sensor (15) is an optical sensor and the determining (57) of a condition where the collision detection sensor (15) is non-functional or irrelevant is based on the collision detection sensor (15) not receiving useful data.

6. Method according to any of the preceding claims wherein the method is carried out in a robotic garden-, or agricultural tool (1).

7. Method according to claim 6, wherein the method is carried out in a robotic lawn mower (1).

8. A self-propelled robotic tool (1) comprising at least one driving wheel (9) driven by an electric motor (35), and at least one collision detection sensor (15) for detecting a collision with another object the method, **characterized by.**
- being configured to operate in a first mode where the collision detection sensor (15) is functional and a second mode where the collision detection sensor (15) is non-functional or irrelevant, wherein
- in the first mode, collision detection is carried out based on the collision detection sensor (15), and a motor current baseline in a non-collision state is recorded, and
- in the second mode, collision detection is carried out in an algorithm (37) based on a motor current measurement in relation to said baseline.
